Europäisches Patentamt

(19) European Patent Office

Office européen des brevets

(11) Publication number: **0 317 184 B1**

(12) **EUROPEAN PATENT SPECIFICATION**

(45) Date of publication of patent specification:
17.07.91 Bulletin 91/29

(51) Int. Cl.⁵: **C09D 163/00, C08G 59/42**

(21) Application number: **88310629.6**

(22) Date of filing: **11.11.88**

(54) Coating compositions based on polyepoxides and polyacid curing agents.

(30) Priority: **13.11.87 US 120272**

(43) Date of publication of application:
**24.05.89 Bulletin 89/21**

(45) Publication of the grant of the patent:
**17.07.91 Bulletin 91/29**

(84) Designated Contracting States:
**BE DE ES FR GB IT NL SE**

(56) References cited:
**EP-A- 0 002 284
EP-A- 0 212 457
US-A- 4 261 871**

(73) Proprietor: **PPG INDUSTRIES, INC.
One PPG Place
Pittsburgh Pennsylvania 15272 (US)**

(72) Inventor: **Chang, Wen-Hsuan
504 Edgehill Drive
Gibsonia Pennsylvania 15044 (US)**
Inventor: **Dufford, Edward Lee
837 Sarver Road
Sarver Pennsylvania 16055 (US)**
Inventor: **Klanica, Joseph Andrew
105 Orchard Drive
Sarver Pennsylvania 16055 (US)**

(74) Representative: **Taylor, Phillip Kenneth et al
W.P. THOMPSON & CO. Coopers Building
Church Street
Liverpool L1 3AB (GB)**

EP 0 317 184 B1

Jouve, 18, rue Saint-Denis, 75001 PARIS

## Description

The present invention relates to coating compositions suitable for use as automotive topcoats, and more particularly as clear coats in a color-clear composite coating.

Color-plus-clear coatings involve the application of a colored or pigmented basecoat to a substrate followed by the application of a transparent to clear topcoat to the basecoat and are becoming increasingly popular as original finishes for automobiles. The color-plus-clear coatings have outstanding gloss and distinctness of image, and the clear coat is particularly important for these properties. Two-pack clear coat compositions comprising polyols such as polyester polyols, polyurethane polyols and acrylic polyols and polyisocyanate curing agents have been the standard in the industry and give outstanding gloss and distinctness of image. However, the polyisocyanates are difficult to handle, being sensitive to moisture and require cumbersome safety precautions.

It is an object of the present invention to provide a color-plus-clear coating system which avoids the problems of the polyisocyanate curing agents but which provides a finish which has outstanding gloss and distinctness of image so that the coating is useful as an original finish for automobiles.

U.S. Patent No. 4,650,718 discloses coating compositions suitable for use as clear coats in a composite color-clear coating. The resinous binder in the coating composition is a polyepoxide and a polyacid curing agent. Among the polyacid curing agents which may be used include carboxylic acid group-containing polymers such as acrylic polymers, polyesters, polyurethanes, oligomers such as ester group-containing oligomers and monomers. There is no suggestion in the reference, however, of forming polyacid curing agents of the specific type set forth in the claims of the present invention which have been found to provide excellent degrees of cure while maintaining relatively high solids content in the coating composition.

In accordance with the present invention, a coating composition comprising resinous binder, an organic solvent and optional ingredients normally found in coating compositions is provided. The resinous binder comprises a polyepoxide and a polyacid curing agent characterised by having an acid equivalent weight less than 450 and having on average more than three-carboxylic acid groups per molecule ; said polyacid being formed from reacting.

(i) a 1,2-anhydride of a cyclic dicarboxylic acid ;

(ii) a polyol component comprising an oligomeric ester having a number average molecular weight of no greater than 1000, and having on average more than three hydroxyl groups per molecule, and formed from reacting :

(a) a linear aliphatic dicarboxylic acid or its functional equivalent thereof having greater than two carbon atoms between carboxyl groups with

(b) an organic polyol having at least three hydroxyl groups, and in that the equivalent ratio of acid groups in the polyacid curing agent to epoxy groups in the polyoxide is from 1.2 to 0.8 : 1 and is sufficient to form a cured product.

The coating compositions are particularly desirable for use as automotive topcoats, particularly clear coats in composite color-plus-clear coatings.

The principal ingredients in the coating compositions of the present invention are the polyepoxide and the polyacid curing agent.

Among the polyepoxides which are used in the practice of the invention are aliphatic polyepoxides. Those containing the cyclohexane oxide moiety are preferred because they have low viscosity, high cyclic contents, low molecular weights and high epoxy contents. These features in combination provide for good physical and chemical properties in the resultant coating while enabling the formulation of high solids coating compositions with good cure response. The preferred polyepoxides are diepoxides, that is, having a 1,2-epoxy equivalency of two.

Particularly preferred polyepoxides are 3,4-epoxycyclohexylmethyl 3,4-epoxycyclohexylcarboxylate. Also, the diepoxides bis(3,4-epoxy-6-methylcyclohexylmethyl) adipate and bis(3,4-epoxycyclohexylmethyl) adipate can be used. These epoxides are commercially available from Union Carbide Corporation as ERL 4221, ERL 4289 and ERL 4299, respectively. Also, epoxies containing the cyclohexane moiety are described in U.S. Patents Nos. 2,890,194 ; 2,890,195 ; 2,890,196 ; 2,890,197 ; 2,890,210 ; 3,023,174 and 3,027,357.

Besides the polyepoxides based on the cyclohexane moiety, low molecular weight epoxy condensation polymers, that is, those having an average 1,2-epoxy functionality of 2 to 2.5 (with the majority of the molecular species, i.e., greater than 50 percent by weight, having a functionality of 2) can be used. Examples of such epoxy condensation polymers are polyglycidyl ethers of aliphatic and cycloaliphatic alcohols and polyglycidyl esters of aliphatic and cycloaliphatic carboxylic acids. These polyepoxides can be produced by etherification or esterification of a cycloaliphatic or aliphatic alcohol or acid with epihalohydrin such as epichlorohydrin in the presence of alkali. Also, etherification products with polyhydric phenols which are then subsequently hydroge-

EP 0 317 184 B1

nated may also be used. Examples of suitable alcohols and phenols are ethylene glycol ; 1,2-propylene glycol; 1,2-cyclohexanedimethanol ; 1,4-cyclohexanediol and hydrogenated bisphenol A. Examples of suitable carboxylic acids are adipic acid and hexahydrophthalic acid.

The polyepoxides mentioned above have relatively low molecular weights, generally 1000 or less, preferably less than 750, and more preferably less than 500, for the formulation of high solids coating compositions.

Optionally, an epoxy group-containing acrylic polymer can also be included in the polyepoxide component. These polyepoxides enhance the hardness and cure response of the resultant coating. Examples of suitable epoxy-containing acrylic polymers are copolymers having an ethylenically unsaturated monomer having at least one epoxy group such as glycidyl methacrylate and glycidyl acrylate with at least one polymerizable ethylenically unsaturated monomer which is free of epoxy groups such as alkyl esters of acrylic and methacrylic acid containing from 1 to 20 carbon atoms in the alkyl group. Examples of such monomers include methyl methacrylate, ethyl acrylate, butyl acrylate and butyl methacrylate. These polymers can be prepared by conventional free radical initiated organic solution polymerization techniques and have molecular weights between 700 and 20,000, more preferably 1000 to 10,000 ; the molecular weight being determined by gel permeation chromatography using a polystyrene standard.

Preferably, the polyepoxide is a mixture of the cyclohexane oxide moiety containing polyepoxide and the epoxy-containing acrylic polymer. The mixture provides the best blend of hardness, solids content and cure response.

The polyepoxide is usually present in the coating composition in amounts of about 20 to 75, preferably from 30 to 60 percent by weight based on total weight of resin solids. When the epoxy-containing acrylic polymer is used, it is present in amounts of up to 20, preferably 1 to 15 percent by weight based on weight of resin solids.

The polyacid curing agent contains more than three carboxylic acid groups per molecule which are reactive with the polyepoxide to form a crosslinked coating. Usually, the curing agent contains about four carboxylic acid groups per molecule. The acid functionality is carboxylic acid which is formed by ring opening a 1,2-anhydride of a cyclic dicarboxylic acid with a polyol component. Such high acid functionality (i.e., acid group per mole) is needed for good cure response and the development of good physical and chemical properties in the resultant coating. Further, high acid values enable the use of more low viscosity polyepoxides resulting in low viscosity, high solids compositions with good flow and high gloss.

The polyacid curing agent is preferably free of unsaturation, particularly ethylenic unsaturation, and chlorine substituents for good exterior durability.

The polyol component comprises an oligomeric ester having on average more than three hydroxyl groups per molecule and is preferably used in amounts of 20 to 70, more preferably 30 to 60 percent by weight based on weight of polyol component and 1,2-anhydride of a cyclic dicarboxylic acid. Preferably, the oligomeric ester is formed from reacting a linear aliphatic dicarboxylic acid or its functional equivalent thereof having greater than 2 carbon atoms between carboxyl groups with an aliphatic polyol having at least three hydroxyl groups. With the oligomeric ester one can tailor make the polyol to have high hydroxyl functionality necessary for the subsequent formation of high acid functionality while introducing linear aliphatic groups for flexibility in the coating. The oligomer being of relatively low molecular weight enables the formation of high solids coatings.

Among the linear aliphatic dicarboxylic acids which can be used are those containing at least two, preferably greater than two carbon atoms between carboxyl groups such as succinic acid, glutaric acid, adipic acid, pimelic acid, suberic acid, azelaic acid, sebacic acid and dimeryl acid, including mixtures of such acids. Preferably, the linear aliphatic dicarboxylic acid contains at least six carbon atoms with adipic acid and sebacic acid being preferred. Also, equivalents of such dicarboxylic acids such as lower alkyl esters of the dicarboxylic acids as well as anhydrides of such dicarboxylic acids where they exist can also be used.

The aliphatic polyol provides the hydroxyl functionality in the ester oligomer. Among the aliphatic polyols which can be employed in the practice of the invention are those containing at least three hydroxy groups. Typically, these polyols will contain from 3 to 12 carbon atoms and specific examples include trimethylolpropane, ditrimethylolpropane, glycerol and pentaerythritol, including mixtures of such polyols. Minor amounts (i.e., less than 50 percent by weight based on total weight of organic polyol) of a diol such as ethylene glycol, propylene glycol and 1-(3-hydroxy-2,2-dimethylpropyl)-3-hydroxy-2,2-dimethylpropionate (ESTER DIOL 204) can be included with the aliphatic polyol.

The oligomeric ester is typically prepared by reacting a molar excess of the aliphatic polyol with the linear aliphatic dicarboxylic acid while removing water during the condensation reaction and reacting to completion as evidenced by a low and essentially constant acid value. Typically, there will be at least 1.5 moles of aliphatic polyol for each mole of linear aliphatic dicarboxylic acid. Preferably, there will be two moles or more of the polyol for each mole of dicarboxylic acid. Also, reaction can be conducted to less than completion such that there will be unreacted acid functionality. Such reaction products assist in the cure. However, unreacted diacid may crystallize on storage.

3

EP 0 317 184 B1

The ester-containing oligomer will have a relatively low molecular weight, on average no greater than 1000, and preferably less than 750, on a number average basis.

Besides the hydroxyl-containing ester oligomer, the polyol component may also optionally include an additional polyol. Typically, these can be low molecular weight organic polyols such as those used in preparing the oligomeric ester or alternately low molecular weight diols such as ethylene glycol, propylene glycol, butylene glycol, 1,6-hexanediol and diethylene glycol. Also, polymeric polyols such as polyethylene glycol, polyoxytetramethylene glycol and poly(ethylene glycol adipate) can also be included in the polyol component. These optional polyols can be incorporated so as to modify the coating properties of the resultant coating composition. For example, the use of long chain glycols such as polyoxytetramethylene glycol increases the flexibility of the coating, whereas short chain polyols such as trimethylolpropane increase the hardness of the coating.

When these optional polyols are used, they are used in relatively minor amounts, i.e., less than 50 percent by weight based on total weight of polyol component.

The 1,2-anhydride of the cyclic dicarboxylic acid which is reacted with the polyol component provides the acid functionality in the polyacid curing agent. Preferably, the anhydride is used in amounts of 20 to 80, more preferably 30 to 70 percent by weight based on total weight of polyol component and 1,2-anhydride of cyclic dicarboxylic acid. The 1,2-anhydrides of the cyclic dicarboxylic acids upon reaction with the polyol component provide acid groups which are very reactive with epoxy functionality and provide excellent cure response in the resultant coating. Additionally, the cyclic moieties provide for hardness and durability in the coating and typically contain from 8 to 12 carbon atoms. Preferably, the cyclic moieties are cycloaliphatic to provide good exterior durability. Examples of suitable anhydrides include hexahydrophthalic anhydride and alkyl derivatives of hexahydrophthalic anhydride such as methylhexahydrophthalic anhydride. Mixtures of hexahydrophthalic and methylhexahydrophthalic anhydrides can also be used.

Optionally, a minor amount (i.e., less than 50, preferably no greater than 30 percent by weight based on total weight of anhydride) of a 1,2-anhydride of an acyclic dicarboxylic acid can be used. These materials will help to flexibilize the coating. Examples of such anhydrides include succinic anhydride, glutaric anhydride and dodecenyl succinic anhydride.

The 1,2-anhydride of the cyclic dicarboxylic acid and the polyol component are reacted together usually by adding one ingredient to the other slowly at the reaction temperature. Preferably, reaction is conducted in the presence of an inert atmosphere such as nitrogen and in the presence of organic solvent to dissolve the ingredients and/or to lower the viscosity of the reaction mixture. Examples of suitable solvents are ketones such as methyl amyl ketone, diisobutyl ketone and methyl isobutyl ketone ; aromatic hydrocarbons such as toluene and xylene. The reaction temperature is usually no greater than 150°C., preferably less than 135°C., and usually within the range of 70-135°C., preferably 90-120°C. A catalyst such as an amine catalyst may optionally be used for the reaction. The time of the reaction can vary somewhat depending principally on the reaction temperature and presence or absence of catalyst and type of catalyst. Usually reaction is conducted until an IR analysis indicates that all the anhydride functionality has been consumed. However, it should be appreciated that reaction can be conducted with excess anhydride such that there is free anhydride in the reaction mixture. Free anhydride may actually improve coating performance but is undesirable because of toxicity concerns.

The equivalent ratio of anhydride to hydroxy of the polyol component is preferably at least 0.8 : 1 (the anhydride being considered monofunctional) to obtain maximum conversion to the desired reaction products. Ratios less than 0.8 : 1 can be used but such ratios result in the preparation of less preferred reaction products.

The polyacid curing agents of the present invention are of relatively low molecular weight and more particularly the acid group equivalent weight is relatively low. Preferably, the acid group equivalent weight is less than 450, more preferably less than 400, most preferably less than 350. Such low acid group equivalent weight in combination with a relatively high acid functionality enables the formation of high resin solids compositions which have excellent cure response and high crosslinking density.

The polyacid curing agent is usually present in the coating composition in amounts of about 25 to 75 and preferably 35 to 65 percent by weight based on total weight of resin solids.

The equivalent ratio of carboxylic acid group to epoxy group in the compositions of the present invention is adjusted so that there are about 1.2 to 0.8, preferably from 1.1 to 0.9 equivalents of carboxyl per equivalent of epoxy ; and the ratio is sufficient so as to form a cured or crosslinked composition as is evidenced by the resistance of the composition to organic solvent.

The polyepoxide-polyacid compositions of the present invention are liquid compositions and are preferably formulated into liquid high solids coating compositions ; that is, the coating compositions contain greater than 40, preferably greater than 50 percent by weight resin solids. The solids content is determined by formulating the coating composition to a No. 4 Ford cup viscosity of 25-30 seconds at 76°F. (24°C.) and determining the solids content according to ASTM 515/85.

Besides the resinous ingredients, the other components of the coating compositions will be the organic

4

EP 0 317 184 B1

solvent. The organic solvents typically used are those which are used in the preparation of the polyacid curing agent and include ketones such as methyl isobutyl ketone and methyl amyl ketone ; as well as aromatic hydrocarbons such as xylene and toluene.

The compositions of the present invention will also preferably contain catalysts to accelerate the cure of the epoxy and acid groups. Examples of suitable catalysts are basic materials and include organic amines and quaternary ammonium compounds such as N,N-dimethyldodecylamine, pyridine, piperidine, dimethyl aniline, diethylenetriamine and tetramethylammonium acetate. When used, the amount of catalyst is typically from 0.1 to 8, preferably from 2 to 5 percent by weight, based on weight of resin solids.

Also, optional ingredients such as auxiliary curing agents such as aminoplasts, plasticizers, anti-oxidants, U.V. light stabilizers, flow control agents, surfactants and other formulating additives can be employed if desired. These materials are optional and are typically present in amounts collectively of up to about 20 percent by weight based on weight of resin solids.

The above-described resinous components can be formulated into clear coating compositions or, alternately, they can be formulated with pigments to form paints. The pigments may be any of the conventional types comprising, for example, iron oxides, lead oxides, strontium chromate, carbon black, coal dust, titanium dioxide, talc, barium sulfate, as well as color pigments such as cadmium yellow, cadmium red, chromium yellow, and metallic pigments such as aluminum flake and metal oxide coated mica.

The pigment content of the paint is usually expressed as the pigment-to-resin weight ratio. In the practice of the invention, when the film-forming coating compositions of the present invention contain pigment, the pigment-to-resin weight ratios may be as high as 2 : 1 and for most pigmented coatings, are within the range of 0.05 to 1 : 1.

The coating compositions of the present invention can be applied to the substrate by any of the conventional coating techniques such as brushing, spraying, dipping or flowing, but it is preferred that spray applications be used since this gives the best appearance. Any of the known spraying techniques may be used such as compressed air spraying, airless spraying, electrostatic spraying and either manual or automatic methods.

After application of the coating composition to the substrate, the coated substrate is heated to cure the coating. In the curing operation, solvents are driven off and the epoxy-acid crosslinking mechanism is activated. The heating or curing operation is usually carried out at a temperature in the range of from 160-350°F. (71-177°C.) but if needed lower or higher temperatures may be used. The thickness of the coating is usually from about 1 to 5, preferably 1.2 to 3 mils.

Preferably, the compositions of the present invention are used to formulate clear coats for use in a color-plus-clear composite coating. In a color-plus-clear application, a composite coating is applied to a substrate. The process comprises applying to the substrate a pigmented or colored film-forming composition to form a basecoat and applying to the basecoat a second film-forming composition to form a transparent topcoat over the basecoat. The film-forming composition of the basecoat can be any of the compositions useful in coating applications, particularly automotive applications in which the color-plus-clear coatings are finding their most use. A film-forming composition conventionally comprises a resinous binder and a pigment to act as a colorant. Particularly useful resinous binders are acrylic polymers, polyesters including alkyds and polyurethanes. The resinous binder for the basecoat can be an organic solvent-based material such as those described in U.S. Patent No. 4,220,679, note column 2, line 24, continuing through column 4, line 40. Also, resinous binders such as described in U.S. Patent No. 4,540,766 can be used. Also, water-based coating compositions such as those described in U.S. Patent No. 4,403,003 and U.S. Patent No. 4,147,679 can also be used as the binder in the basecoat composition. The resinous binder for the basecoat can also be a polyepoxidepolyacid composition of the present invention.

The basecoat composition also contains pigments including metallic pigmentation to give a color. Examples of suitable pigmentations for the basecoat are described in the aforementioned U.S. Patents Nos. 4,220,679 ; 4,540,766 ; 4,403,003 and 4,147,679.

Optional ingredients in the basecoat composition are those which are well known in the art of formulating surface coatings and include surfactants, flow control agents, thixotropic agents, fillers, anti-gassing agents, organic co-solvents, catalysts and other customary auxiliaries. Examples of these materials and suitable amounts are described in the aforementioned U.S. Patents Nos. 4,220,679 ; 4,540,766 ; 4,403,003 and 4,147,679. The usual spray techniques and equipment for air spraying and electrostatic spraying and either manual or automatic methods can be used, but they are most often applied by spraying.

During application of the basecoat to the substrate, a film of the basecoat is formed on the substrate typically in a thickness of about 0.1 to 5 and preferably about 0.1 to 2 mils. After forming a film of the basecoat on the substrate, solvent, that is, organic solvent and/or water, is driven out of the basecoat film by heating or simply an air drying period before application of the clear coat. Preferably, the heating step if needed will only be that sufficient and for a short period of time to ensure that the clear topcoat composition can be applied to the basecoat without the former dissolving the basecoat composition, that is, "striking in". Suitable drying conditions will depend on the particular basecoat composition, on the ambient humidity with certain water-based compositions, but in general, a drying time of from about 1 to 5 minutes and a temperature of from about 80° to 175°F. (20° to 79°C.) will be adequate to ensure that the mixing of the two coats is minimized. At the same time, the basecoat film must be adequately wetted by the clear topcoat composition so that satisfactory intercoat adhesion can be obtained. Also, more than one application of basecoat and more than one application of topcoat may be applied to develop optimum appearance. Usually between applications of one coat, the previously applied basecoat or topcoat is flashed, that is, exposed to ambient conditions for about 1 to 20 minutes.

The clear topcoat composition is applied to the basecoat by any of the conventional coating techniques mentioned above, although spray applications are preferred. As mentioned above, the clear topcoat is preferably applied to the basecoat via a wet-on-wet technique before the basecoat has been cured. The two coatings are then heated to conjointly harden both coating layers. Curing conditions such as described above can be used.

The invention will be further defined by reference to the following examples. Unless otherwise indicated, all parts are by weight.

Example 1

An oligomeric ester containing 4 hydroxyl groups per molecule was prepared by reacting trimethylolpropane and adipic acid in a 2 : 1 molar ratio as follows :

| Ingredients | Parts by Weight (in grams) |
| --- | --- |
| Trimethylolpropane | 10524 |
| Adipic acid | 5691 |
| Triphenyl phosphite | 12.2 |
| Toluene | 100 |

The trimethylolpropane and triphenyl phosphite were charged to a reaction vessel equipped with a stirrer, Dean-Stark trap, condenser and a nitrogen purge and heated under a nitrogen atmosphere to melt the trimethylolpropane. The adipic acid was charged while the trimethylolpropane was melting. The reaction vessel was then heated to 190°C. with the removal of water through the Dean-Stark trap. The reaction mixture was heated at reflux with toluene being slowly added to the reaction mixture to keep the reflux temperature below 190°C. The reaction was continued until an acid value of 10.5 was obtained. The ester oligomer (6326 grams) prepared as described above was thinned with 656 grams of toluene to give a solids content (measured at 110°C.) of 82.3 (theoretical value = 90), an acid value of 8.2 and a hydroxyl value of 536.2.

The ester oligomer prepared as described above was reacted with methylhexahydrophthalic anhydride to form a polyacid curing agent as follows :

| Ingredients | Parts by Weight (in grams) |
| --- | --- |
| Ester oligomer prepared as described above | 1042 |
| Toluene | 351 |
| Methylhexahydrophthalic anhydride[1] | 1714 |
| Methyl isobutyl ketone | 814 |

[1]The methylhexahydrophthalic anhydride used in these examples was obtained from Milliken Chemicals as MILLDRIDE MHHPA which was indicated to be a 70/30 mixture of methylhexahydrophthalic anhydride and hexahydrophthalic anhydride.

The ester oligomer and the toluene were charged to a reaction vessel equipped with a stirrer, addition funnel, Dean-Stark trap, condenser and nitrogen purge and heated to reflux under a nitrogen atmosphere to remove any residual water through the Dean-Stark trap. The ingredients in the reaction vessel were then heated to 112°C. and the methylhexahydrophthalic anhydride added through a dropping funnel over about a one-hour period. The reaction mixture was held at 115-120°C. until infrared analysis showed that all the anhydride functionality had been consumed. The reaction mixture was then cooled to 107°C. followed by thinning with the methyl isobutyl ketone. The resultant reaction product had a solids content measured at 110°C. of 72.3 and an acid value of 153.7. The polyacid curing agent described above (acid equivalent weight = 264 at 100 percent solids) was formulated into a clear coating composition as follows :

**Base Mix**

| Ingredients | Parts by Weight (in grams) | Resin Solids |
|---|---|---|
| Xylene | 15.0 | - |
| Methyl isobutyl ketone | 15.0 | - |
| TINUVIN 328[1] | 3.0 | 3.0 |
| TINUVIN 292[2] | 1.0 | 1.0 |
| Flow control agent[3] | 0.34 | 0.2 |
| ARMEEN-DM 12D[4] | 4.0 | 4.0 |
| Epoxy-containing acrylic polymer[5] | 16.7 | 10.0 |
| ERL 4299[6] | 36.0 | 36.0 |
| Hexyl acetate | 8.0 | - |

[1]Substituted benzotriazole UV light stabilizer available from Ciba-Geigy Corporation.

[2]Bis(1,2,2,6,6-pentamethyl-4-piperidinyl)decanedioate available from Ciba-Geigy Corporation.

[3]Polybutylacrylate having an $M_w$ of about 10,000 and an $M_n$ of about 2400; 58.8 percent solids in xylene.

[4]N,N-dimethyldodecylamine catalyst available from Akzo Chemical.

[5]Acrylic polymer containing 40 percent glycidyl methacrylate, 20 percent methyl methacrylate, 20 percent butyl acrylate and 20 percent butyl methacrylate; the percentages by weight being based on total weight of monomers. The polymer has an $M_n$ of 1456 as determined by gel permeation chromatography using polystyrene standard and a solids content of 60 percent by weight in xylene.

[6]Bis(3,4-epoxycyclohexylmethyl) adipate from Union Carbide Corporation.

The ingredients described above were mixed together with low shear stirring in the order indicated to form the base mix.

The base mix was combined with the polyacid curing agent described above as follows :

| Ingredients | Parts by Weight (in grams) | Resin Solids |
|---|---|---|
| Base Mix | 99.04 | 54.2 |
| Polyacid curing agent | 77.14 | 54.0 |
| Hexyl acetate | 3.3 | – |

The ingredients were mixed together in the order indicated with low shear mixing to form the coating composition. The composition had a No. 4 Ford cup viscosity of 26.7 and a solids content of 58 percent.

Base Coat Composition

A silver metallic base coat composition was prepared from mixing together a polyester polyol, a polyurethane polyol, aluminum flake and other coating ingredients, as follows :

| Ingredients | Parts by Weight (in grams) | Solids |
|---|---|---|
| TINUVIN 328 | 2.0 | 2.0 |
| Hexyl acetate | 35.0 | - |
| Methanol | 6.0 | - |
| Polymeric microparticles[1] | 22.7 | 10.0 |
| Polyester polyol[2] | 11.1 | 10.0 |
| Polyurethane polyol[3] | 37.5 | 30.0 |
| RESIMINE 717[4] | 47.6 | 40.0 |
| Pigment paste[5] | 40.0 | 22.0 |
| Phosphated epoxy[6] | 1.5 | 0.3 |
| Hexyl acetate | 23.0 | - |

[1] Polymeric microparticles prepared in accordance with Example 2 of U.S. Patent No. 4,147,688 and diluted on a 1:1 volume basis with 2-hexoxyethanol.

[2] Polyester polyol prepared as generally described in Example A of U.S. Patent No. 4,410,688 with the exception that xylene was used in place of methyl amyl ketone. The polyester had an actual solids content of 78 percent, an acid value of 7.93 and a hydroxyl value of 271.23.

[3] Polyurethane polyol prepared as generally described in Example 1 of U.S. Patent No. 4,540,766. The polyurethane polyol had an actual solids content of 77.6 percent, an acid value of 5.52 and a hydroxyl value of 80.73.

[4] Aminoplast resin available from Monsanto Company.

[5] Pigment paste prepared by mixing together the following ingredients:

| Ingredients | Parts by Weight (in grams) | Resin Solids | Pigment Solids |
|---|---|---|---|
| Polyester polyol (as described above) | 27.8 | 25.0 | - |
| Hexyl acetate | 26.0 | - | - |
| Aluminum flake dispersed in mineral spirits | 46.2 | - | 30.0 |

[6] Hydrogenated diglycidyl ether of bisphenol A (epoxy equivalent = 240) reacted with phosphoric acid (1 mole phosphoric acid per equivalent of epoxy).

The ingredients were mixed together in the order indicated with low shear stirring to form the base coat composition which had a No. 4 Ford cup viscosity of 21.7 seconds and a solids content of 54.9 percent.

The coating composition as described above was applied as a clear coat on a wet-on-wet application as follows : The silver metallic basecoat was spray applied to a primed steel substrate and given a flash at room temperature for 5 to 10 minutes to form a basecoat having a thickness of about 0.6 mils. The clear coat composition described above was spray applied to the basecoat. The composite coating was then cured for 30 minutes at 265°F. (129°C.). The clear coat had a thickness of about 1.6 mils. The composite coating was then measured for gloss, distinctness of image, hardness, humidity resistance and resistance to xylene. The results are reported in Table I below.

## Example 2

A polyacid curing agent similar to that used in Example 1 was prepared with the exception that hexahydrophthalic anhydride was used in place of MILLDRIDE MHHPA. The polyacid curing agent was formulated into a coating composition containing a polyepoxide. The coating composition was applied as a clear coat in a color-clear formulation and the properties of the composite coating evaluated.

An ester oligomer was prepared as described in Example 1. The ester was then reacted with hexahydrophthalic anhydride to form the polyacid curing agent as follows :

| Ingredients | Parts by Weight (in grams) | Resin Solids |
|---|---|---|
| Ester oligomer | 859.5 | 854.3 |
| Toluene | 262.5 | - |
| Hexahydrophthalic anhydride | 1125 | 1125 |
| Methyl isobutyl ketone | 282 | - |
| ARMEEN DM-12D | 19.8 | 19.8 |
| Toluene | 26 | - |
| Methyl isobutyl ketone | 403 | - |
| Hexahydrophthalic anhydride | 270 | 216 |
| Methyl isobutyl ketone | 54 | - |

The ester oligomer and the first portion of toluene were charged to a reaction vessel equipped with a stirrer, Dean-Stark trap, condenser, addition funnel and nitrogen purge. The ingredients were heated to reflux under a nitrogen atmosphere to remove any water present through the Dean-Stark trap. The ARMEEN DM-12D was then added at 102°C. At a temperature of 110°C., the first portion of hexahydrophthalic anhydride and methyl isobutyl ketone were premixed and slowly added to the reaction mixture. The second portion of the premixed hexahydrophthalic anhydride and methyl isobutyl ketone was added slowly to the reaction mixture at 110°C. The reaction mixture was then heated to 122°C. for 30 minutes and then cooled to 110°c. and held at this temperature. The reaction mixture was maintained at about 110°C. until an IR analysis indicated that all of the anhydride functionality was consumed. The reaction mixture was then thinned to a 68 percent resin solids solution by adding the remaining portions of toluene and methyl isobutyl ketone. The resultant polyacid curing agent had a Gardner-Holdt viscosity of 53 seconds and an acid value of 152. The polyacid curing agent (acid equivalent weight = 251 at 100 percent resin solids) was formulated into a coating composition as follows :

### Additive Mix

| Ingredients | Parts by Weight (in grams) | Resin Solids |
|---|---|---|
| Xylene | 15.0 | - |
| Methyl isobutyl ketone | 15.0 | - |
| TINUVIN 328 | 3.0 | 3.0 |
| TINUVIN 292 | 1.0 | 1.0 |
| Polybutylacrylate | 0.34 | 0.2 |

10

The ingredients were mixed in the order indicated with low shear mixing to form the additive mix. The polyacid curing agent was then added to the additive mix as follows :

| Ingredients | Parts by Weight (in grams) | Resin Solids |
|---|---|---|
| Additive mix | 34.34 | 4.2 |
| Polyacid curing agent | 76.0 | 53.2 |
| ARMEEN DM-12D | 4.0 | 4.0 |
| Epoxy-containing acrylic polymer as used in Example 1 | 16.67 | 10.0 |
| ERL 4299 | 36.8 | 36.8 |
| Hexyl acetate | 13.5 | - |

The ingredients were mixed in the order indicated with low shear mixing to form the coating composition which had a resin solids content of 57.5 percent and a No. 4 Ford cup viscosity of 26.2 seconds.

The coating composition was then applied as a clear coat in a color-clear composite coating. In forming the composite coating, the silver metallic basecoat composition as described in Example 1 was first spray applied to a primed steel panel to a thickness of about 0.6 mils. The coating was given a flash at room temperature for 10-15 minutes followed by application by spraying of the clear coat composition. The composite coating was then cured at 121°C. for 30 minutes. The dry film thickness of the clear coat was about 2.2 mils. The properties of the coating are reported in Table I below.

## Example 3

A polyacid curing agent similar to that of Example 1 was prepared with the exception that the polyacid curing agent was post-reacted with glycidol and additional methylhexahydrophthalic anhydride to increase the acid functionality of the resultant polyacid curing agent. The polyacid curing agent was prepared as follows :

| Ingredients | Parts by Weight (in grams) | Solids |
|---|---|---|
| Polyacid curing agent of Example 1 | 1000 | 700 |
| Glycidol | 74 | 74 |
| Ortho-sulfobenzoic anhydride (catalyst) | 0.8 | - |

The polyacid curing agent of Example 1 was charged to a reaction vessel equipped with a stirrer, addition funnel, condenser and nitrogen purge and heated to 115°C. The addition of the glycidol was then started and after the addition of approximately 25 percent, the ortho-sulfobenzoic anhydride catalyst was added. The glycidol addition was then continued while maintaining the reaction temperature at a mild reflux. The reaction mixture was then held at about 120°C. until essentially all the epoxy functionality had reacted.

To 843.7 grams of the reaction product prepared as described above was slowly added 160.9 grams of methylhexahydrophthalic anhydride while maintaining the reaction temperature at about 110-112°C. When all the methylhexahydrophthalic anhydride was added, the 7.7 grams of ARMEEN DM-12D were added followed by holding the reaction temperature at 120°C. until IR analysis showed all the anhydride had reacted. The reaction mixture was then thinned with 93.8 grams of a mixture of methyl isobutyl ketone and toluene (69/31 weight ratio) to a solids content of 70 percent.

The polyacid curing agent (acid equivalent weight = 283.5 at 100 percent solids) was then formulated into a coating composition as generally described in Example 2 as follows :

| Ingredients | Parts by Weight (in grams) | Resin Solids |
|---|---|---|
| Additive mix of Example 2 | 34.34 | 4.2 |
| Polyacid curing agent | 78.6 | 55.0 |
| ARMEEN DM-12D | 4.0 | 4.0 |
| Epoxy-containing acrylic polymer as used in Example 1 | 16.67 | 10.0 |
| ERL 4299 | 35.0 | 35.0 |
| Hexyl acetate | 18.0 | - |

The ingredients were mixed together with low shear mixing to form the coating composition which had a solids content of 55.8 percent and a No. 4 Ford cup viscosity of 26.5 seconds. When the coating composition was applied as a clear to a color-clear composite coating as described in Example 2, the composite coating had the properties reported in Table I below.

12

## Table I

### Properties of Color-Clear Composite Coatings of Examples 1-3

| Example | Gloss[1] | DOI[2] | Hardness[3] | Adhesion[4] | Humidity Resistance[5] | | Pencil Hardness[6] | Xylene Resistance[7] Pencil Hardness |
|---|---|---|---|---|---|---|---|---|
| | | | | | Adhesion | Gloss | | |
| 1 | 84 | 75 | 11.20 | 5 | 5 | - | F | B |
| 2 | 86 | 85 | 13.90 | 5 | 5 | 85 | H | 3B |
| 3 | 85 | 85 | 14.05 | 5 | 5 | 78 | H | 2B |

[1] Measured with a 20 degree gloss meter manufactured by Gardner Instrument Company.

[2] Distinctness of image (DOI) determined on a C-Box manufactured by C-Box $I^2R$ Co.

[3] Tukon hardness number determined by ASTM E-48.

[4] Crosshatch adhesion determined generally in accordance with the procedures of ASTM D-3359. The adhesion was rated 0-5 with 5 indicating excellent adhesion.

[5] Humidity resistance determined by using a coated substrate as the ceiling of a humidity chamber (QCT chamber) with the coating directed inwardly to the chamber. The chamber is heated to 140°F. (60°C.) and about a 2-inch (3 cm) level of water is located 3 to 5 inches below the coated panel (panel sloped). After being exposed for 18 hours in the humidity chamber, the adhesion and gloss of the coating was determined and compared with the original adhesion and gloss values before humidity testing.

[6] The pencil hardness is determined by taking a series of standard pencils of varying hardness with 6H being the hardest and 6B being the softest and scratching the coated panels with pencils of increasing hardness until the coating was etched away.

[7] The xylene resistance was determined by determining the pencil hardness after the xylene spotting in which a drop of xylene is placed on the coating for three minutes and then wiped off.

Example 4

A polyacid curing agent similar to that used in Example 1 was prepared with the exception that a mixture of trimethylolpropane and 1-(3-hydroxy-2,2-dimethylpropyl)-3-hydroxy-2,2-dimethylpropionate (ESTER DIOL 204 from Union Carbide) was reacted with adipic acid to form the hydroxyl-containing ester oligomer which was then further reacted with methylhexahydrophthalic anhydride to form the polyacid curing agent. The polyacid curing agent was then formulated into a coating composition with the diglycidyl ether of hydrogenated bisphenol A. The coating composition was applied as a clear coat over steel panels and the properties of the cured coating evaluated.

The oligomeric ester was prepared as follows :

| Ingredients | Parts by Weight (in grams) |
|---|---|
| Trimethylolpropane | 2307.4 |
| Adipic acid | 1247.7 |
| ESTER DIOL 204 | 349.5 |
| Triphenyl phosphite | 2.9 |
| Toluene | 100 |

The trimethylolpropane, adipic acid, ESTER DIOL 204, triphenyl phosphite and 10 grams of toluene were charged to a reaction vessel equipped with a stirrer, Dean-Stark trap, condenser and nitrogen purge and heated under a nitrogen atmosphere to the distillation temperature to distill off water. When the temperature of the reaction mixture reached 190°C., the remaining portion of the toluene was slowly dripped into the reaction mixture to maintain the distillation temperature below 190°C. Reaction was held at a temperature of about 186°C. until an acid value of 4.72 was obtained. The reaction mixture was then cooled to room temperature. The acid value of the final reaction product was 4.14, had a Gardner-Holdt viscosity of 64.5 seconds, a solids content (measured at 110°C.) of 80.6 (theoretical solids = 90 percent), a hydroxyl value of 534 and an acid value of 4.3.

The ester oligomer prepared as described above was reacted with methylhexahydrophthalic anhydride to form a polyacid curing agent as follows :

| Ingredients | Parts by Weight (in grams) |
|---|---|
| Ester oligomer prepared as described above | 738.6 |
| Toluene | 194.2 |
| Methylhexahydrophthalic anhydride | 824.2 |
| Methyl isobutyl ketone | 377.6 |

The ester oligomer and toluene were charged to a reaction vessel equipped with a stirrer, addition funnel, Dean-Stark trap, condenser and nitrogen purge and heated to 110°C. The methylhexahydrophthalic anhydride was added through a dropping funnel over a 40-minute period. The reaction mixture was held at about 110°C. until an IR analysis indicated that all the anhydride functionality had been consumed. The reaction mixture was then thinned with the methyl isobutyl ketone. The resulting reaction product had a theoretical solids content of 70 percent, an acid value of 133.3 and an acid equivalent weight of 294.6 measured at 100 percent solids. The polyacid curing agent described above was formulated into a coating composition as follows :

| Ingredients | Parts by Weight (in grams) | Solids |
|---|---|---|
| Polyacid curing agent | 21 | 14.7 |
| EPONEX DRH-1510[1] | 12 | 12 |
| ARMEEN DM-12D | 1.1 | 1.1 |
| Methyl isobutyl ketone | 8.8 | - |

[1] Diglycidyl ether of hydrogenated bisphenol A available from Shell Chemical Co.

The ingredients described above were mixed together with low shear mixing in the order indicated to form the coating composition. The composition had a solids content of 65 percent. The coating composition was applied as a clear coat over a steel primer. The clear coat composition was cured at 280°F. (138°C.) for 30 minutes. The resultant cured coating was hard, glossy and resistant to both acetone and methyl ethyl ketone.

Example 5

A polyacid curing agent similar to that of Example 1 was prepared with the exception that a mixture of sebacic and adipic acid was used in place of the adipic acid. The polyacid curing agent was formulated into a coating composition containing the polyepoxide of Example 4. The coating composition was applied as a clear coat to a steel panel, the coating cured and the properties of the cured coating evaluated. The oligomeric ester was prepared as follows :

| Ingredients | Parts by Weight (in grams) |
|---|---|
| Trimethylolpropane | 2624 |
| Adipic acid | 1021 |
| Sebacic acid | 354 |
| Triphenyl phosphite | 4 |
| Toluene | 409 |

The trimethylolpropane, adipic acid, sebacic acid, triphenyl phosphite and 10 grams of toluene were charged to a reaction vessel equipped with a stirrer, Dean-Stark trap, condenser and nitrogen purge and heated under a nitrogen atmosphere to the distillation temperature to distill off water. When the reaction temperature reached 190°C., toluene was slowly dripped in to maintain the distillation temperature below 190°C. The reaction was held at 198°C. until about 312 milliliters of water were removed. The temperature was then held between 160-170°C. until an acid value of 11.6 was obtained. The reaction mixture was then diluted with any remaining toluene to a theoretical solids content of 90 percent.

The ester oligomer had an actual solids content of 88.0 percent, a hydroxyl value of 560.5, a Gardner-Holdt viscosity of 72 seconds and an acid value of 10.5.

The ester oligomer prepared as described above was reacted with methylhexahydrophthalic anhydride to form a polyacid curing agent as follows :

A mixture of the ester-containing oligomer prepared as described above, methyl isobutyl ketone and ARMEEN DM-12D was prepared as follows :

| Ingredients | Parts by Weight (in grams) | Solids |
|---|---|---|
| Ester oligomer prepared as described above | 200 | 180 |
| Methyl isobutyl ketone | 43 | - |
| ARMEEN DM-12D | 5.4 | 5.4 |

13.5 grams of the mixture prepared as described immediately above were mixed with 16.2 grams of methylhexahydrophthalic anhydride and heated for $1\frac{1}{2}$ hours at 240°F. (116°C.) until an IR analysis indicated that all the anhydride functionality had been consumed. The resultant reaction product had a solids content of 76.2 percent and was thinned with additional methyl isobutyl ketone to a 70 percent solids solution. The polyacid curing agent was formulated into a coating composition as follows :

| Ingredients | Parts by Weight (in grams) | Solids |
|---|---|---|
| Polyacid curing agent | 25 | 19 |
| Methyl isobutyl ketone | 2 | - |
| DRH-1510 | 19 | 19 |
| ARMEEN DM-12D | 1.5 | 1.5 |
| Methyl isobutyl ketone | 12.5 | - |

The ingredients were mixed together in the order indicated with low shear mixing to form the coating composition. The composition had a solids content of 65 percent. When drawn down over steel panels and cured for 30 minutes at 280°F. (138°C.), a hard, glossy, flexible film which was resistant to methyl ethyl ketone resulted.

Example 6

A polyacid curing agent similar to that of Example 1 was prepared with the exception of di-trimethylolpropane was used in place of trimethylolpropane. The polyacid curing agent was formulated into a coating composition with the diglycidyl ether of hydrogenated bisphenol A. The coating composition was applied as a clear coat over steel panels, the coating cured and the properties of the cured coating evaluated. The ester oligomer was prepared as follows :

| Ingredients | Parts by Weight (in grams) |
|---|---|
| Di-trimethylolpropane | 3100 |
| Adipic acid | 905 |
| Triphenyl phosphite | 3 |
| Toluene | 423 |

The trimethylolpropane, adipic acid and triphenyl phosphite were charged to a reaction vessel equipped with a stirrer, Dean-Stark trap, condenser and nitrogen purge and heated under a nitrogen atmosphere to the distillation temperature to remove water. When the reaction temperature reached 190°C., toluene was slowly added to the reaction mixture to keep the distillation temperature below 190°C. The reaction mixture was held until an acid value of 6.5 was obtained. The reaction mixture was then thinned with methyl isobutyl ketone to a 75 percent theoretical solids content. The resin was clear, water white and had a Gardner-Holdt viscosity of 16.5 seconds.

The ester oligomer prepared as described above was reacted with methylhexahydrophthalic anhyride to form the polyacid curing agent as follows :

16

| Ingredients | Parts by Weight (in grams) |
|---|---|
| Ester oligomer prepared as described above | 194.7 |
| Methylhexahydrophthalic anhydride | 279.7 |
| Methyl isobutyl ketone | 175.6 |

The above ingredients were mixed together and placed in a quart jar and placed in an oven at 240°F. (116°C.) for 7 hours. An IR analysis indicated that the reaction mixture still contained some anhydride functionality. The jar was permitted to stand at room temperature for 5 days, after which an IR analysis showed that all the anhydride functionality had been consumed. The reaction mixture had a solids content measured at 110°C. of 74.8, an acid value of 161.8 and a hydroxyl value of 48. The polyacid curing agent described above (acid equivalent weight = 259.3 at 100 percent solids) was formulated into a coating composition as follows :

| Ingredients | Parts by Weight (in grams) | Solids |
|---|---|---|
| Polyacid curing agent | 25 | 17.5 |
| EPONEX DRH-1510 | 15.7 | 15.7 |
| Methyl isobutyl ketone | 7.0 | - |
| ARMEEN DM-12D | 1.3 | 1.3 |

The ingredients were mixed together in the order indicated with low shear mixing to form the coating composition. The composition had a solids content of 65 percent. When a coating composition was drawn down over steel panels and cured for 30 minutes at 280°F. (138°C.), a glossy, hard, very flexible coating resulted which was resistant to methyl ethyl ketone.

## Claims

1. An improved coating composition suitable for use as an automotive topcoat which comprises a resinous binder, organic solvent and optional ingredients normally found in automotive topcoat compositions, the resinous binder comprising a polyepoxide and a polyacid curing agent, characterised in that the polyacid curing agent has an acid equivalent weight less than 450 and has on average more than three carboxylic acid groups per molecule ; said polyacid being formed from reacting :
   (i) a 1,2-anhydride of a cyclic dicarboxylic acid ;
   (ii) a polyol component comprising an oligomeric ester having a number average molecular weight of no greater than 1000, and having on average more than three hydroxyl groups per molecule, and formed from reacting :
   (a) a linear aliphatic dicarboxylic acid or its functional equivalent thereof having greater than two carbon atoms between carboxyl groups with
   (b) an organic polyol having at least three hydroxyl groups and in that the equivalent ratio of acid groups in the polyacid curing agent to epoxy groups in the polyepoxide is from 1.2 to 0.8 : 1 and is sufficient to form a cured product.

2. A composition as claimed in claim 1, characterised in that the polyepoxide (A) is selected from a cyclohexane oxide moiety containing polyepoxides and polyglycidyl ethers of cycloaliphatic polyols.

3. A composition as claimed in claim 2, characterised in that the polyepoxide (A) additionally contains an epoxy group-containing acrylic polymer.

4. A composition as claimed in any of claims 1 to 3, characterised in that the polyacid curing agent has an acid equivalent weight of less than 400.

5. A composition as claimed in any of claims 1 to 4, characterised in that the cyclic anhydride (i) is a cycloaliphatic anhydride.

6. A composition as claimed in claim 5, characterised in that the cycloaliphatic anhydride is selected from the class consisting of hexahydrophthalic anhydride and an alkyl-substituted hexahydrophthalic anhydride including mixtures thereof.

7. A composition as claimed in any of claims 1 to 6, characterised in that the oligomeric ester has a number average molecular weight less than 750.

8. A composition as claimed in any of claims 1 to 7, characterised in that the aliphatic dicarboxylic acid or its functional equivalent thereof (a) has at least six carbon atoms.

9. A composition as claimed in claim 8, characterised in that the aliphatic dicarboxylic acid or its functional equivalent thereof is selected from the class consisting of adipic acid, succinic acid and mixtures thereof and functional equivalents of such dicarboxylic acids.

10. A composition as claimed in any of claims 1 to 9, characterised in that the organic polyol (b) is an aliphatic polyol containing from 3 to 12 carbon atoms.

11. A composition as claimed in any of claims 1 to 10, in which the molar ratio of organic polyol (b) to linear aliphatic dicarboxylic acid groups (a) is at least 1.5 : 1.

12. A composition as claimed in any of claims 1 to 11, characterised in that the polyol component (ii) further comprises a polyether polyol.

13. A composition as claimed in claim 12, characterised in that the polyether polyol is a poly(oxytetramethylene) polyol.

14. A composition as claimed in any of claims 1 to 13, characterised in that the equivalent ratio of anhydride groups in (i) to hydroxyl groups in (ii) is at least 0.8 : 1.

15. A method for applying a composite coating to a substrate which comprises applying to the substrate a coloured film-forming composition to form a basecoat and applying to the basecoat a clear film-forming composition to form a transparent topcoat over the basecoat, characterised in that the clear film-forming composition comprises the resinous binder of any of claims 1 to 14.

## Patentansprüche

1. Verbesserte Beschichtungszusammensetzung zur Verwendung als Decklack für Automobile mit einem Harzbinder, organischem Lösemittel und gegebenenfalls in Autodecklakken üblicherweise enthaltenen Bestandteilen, wobei der Harzbinder ein Polyepoxid und ein polysaures Härtungsmittel enthält, **dadurch gekennzeichnet,** daß das polysaure Härtungsmittel ein Säureäquivalentgewicht von kleiner 450 und im Mittel mehr als drei Carbonsäuregruppen pro Molekül aufweist, wobei die Polysäure gebildet wird durch Umsetzen von

(i) einem 1,2-Anhydrid einer cyklischen Dicarbonsäure,

(ii) einem Polyolbestandteil, enthaltend einen oligomeren Ester mit einem zahlenmittleren Molekulargewicht von nicht mehr als 1.000 und der im Mittel mehr als drei Hydroxylgruppen pro Molekül aufweist und gebildet wird durch Umsetzen von

(a) einer linearen aliphatischen Dicarbonsäure oder ihren funktionellen Äquivalenten mit mehr als zwei Kohlenstoffatomen zwischen Carboxylgruppen mit

(b) einem organischen Polyol mit mindestens drei Hydroxylgruppen, und wobei das Äquivalentverhältnis der sauren Gruppen in dem polysauren Härtungsmittel zu Epoxygruppen im Polyepoxid von 1,2 bis 0.8 : 1 und ausreichend ist, um ein gehärtetes Produkt zu ergeben.

2. Zusammensetzung nach Anspruch 1, **dadurch gekennzeichnet,** daß das Polyepoxid (A) ausgewählt ist aus eine Cyklohexanoxidgruppe enthaltenden Polyepoxiden und Polyglycidylethern von cykloaliphatischen Polyolen.

3. Zusammensetzung nach Anspruch 2, **dadurch gekennzeichnet,** daß das Polyepoxid (A) zusätzlich ein Epoxygruppen enthaltendes Acrylpolymer enthält.

4. Zusammensetzung nach jedem der Ansprüche 1-3, **dadurch gekennzeichnet,** daß das polysaure Härtungsmittel ein Säureäquivalentgewicht von kleiner 400 aufweist.

5. Zusammensetzung nach jedem der Ansprüche 1-4, **dadurch gekennzeichnet,** daß das cyklische Anhydrid (i) ein cykloaliphatisches Anhydrid ist.

6. Zusammensetzung nach Anspruch 5, **dadurch gekennzeichnet,** daß das cykloaliphatische Anhydrid ausgewählt ist aus der Klasse bestehend aus Hexahydrophthalsäureanhydrid und einem alkylsubstituiertem Hexahydrophthalsäureanhydrid, einschließlich Mischungen derselben.

7. Zusammensetzung nach jedem der Ansprüche 1-6, **dadurch gekennzeichnet,** daß der oligomere Ester ein zahlenmittleres Molekulargewicht von kleiner 750 aufweist.

8. Zusammensetzung nach jedem der Ansprüche 1-7, **dadurch gekennzeichnet,** daß die aliphatische Dicarbonsäure oder ihr funktionelles Äquivalent (a) mindestens sechs Kohlenstoffatome aufweist.

9. Zusammensetzung nach Anspruch 8, **dadurch gekennzeichnet,** daß die aliphatische Dicarbonsäure oder ihr funktionelles Äquivalent ausgewählt ist aus der Klasse bestehend aus Adipinsäure, Bernsteinsäure und Mischungen derselben und funktionellen Äquivalenten dieser Dicarbonsäuren.

10. Zusammensetzung nach jedem der Ansprüche 1-9, **dadurch gekennzeichnet,** daß das organische Polyol (b) ein aliphatisches Polyol mit 3-12 Kohlenstoffatomen ist.

11. Zusammensetzung nach jedem der Ansprüche 1-10, **dadurch gekennzeichnet,** daß das Molverhältnis von organischem Polyol (b) zu linearen aliphatischen Dicarbonsäuregruppen (a) mindestens 1,5 : 1 beträgt.

12. Zusammensetzung nach jedem der Ansprüche 1-11, **dadurch gekennzeichnet,** daß der Polyolbestandteil (ii) weiterhin ein Polyetherpolyol enthält.

13. Zusammensetzung nach Anspruch 12, **dadurch gekennzeichnet,** daß das Polyetherpolyol ein Poly(oxytetramethylen)polyol ist.

14. Zusammensetzung nach jedem der Ansprüche 1-13, **dadurch gekennzeichnet,** daß das Äquivalentverhältnis von Anhydridgruppen in (i) zu Hydroxylgruppen in (ii) mindestens 0,8 : 1 beträgt.

15. Verfahren zum Aufbringen einer mehrschichtigen Beschichtung auf einen Träger durch Aufbringen auf den Träger einer gefärbten filmbildenden Zusammensetzung, um eine Grundbeschichtung auszubilden, und Aufbringen auf die Grundbeschichtung einer klaren, filmbildenden Zusammensetzung, um eine transparente Deckschicht über der Grundbeschichtung auszubilden, **dadurch gekennzeichnet,** daß die klare, filmbildende Zusammensetzung den Harzbinder nach jedem der Ansprüche 1-14 enthält.

## Revendications

1. Composition de revêtement améliorée convenant pour l'utilisation comme couche de finition pour automobiles qui comprend un liant résineux, du solvant organique et des ingrédients facultatifs trouvés normalement dans les compositions de couche de finition pour automobiles, le liant résineux comprenant un polyépoxyde et un agent durcisseur polyacide, caractérisée en ce que l'agent durcisseur polyacide présente un poids équivalent d'acide inférieur à 450 et présente en moyenne plus de trois groupes acide carboxylique par molécule ; ledit polyacide étant formé en faisant réagir :
   (i) un 1,2-anhydride d'un acide dicarboxylique cyclique ;
   (ii) un composant polyol comprenant un ester oligomère présentant un poids moléculaire moyen non supérieur à 1000, et présentant en moyenne plus de trois groupes hydroxyle par molécule, et formé en faisant réagir :
   (a) un acide dicarboxylique aliphatique linéaire ou son équivalent fonctionnel ayant plus de deux atomes de carbone entre les groupes carboxyle avec
   (b) un polyol organique ayant au moins trois groupes hydroxyle, et en ce que le rapport équivalent des groupes acide dans l'agent durcisseur polyacide aux groupes époxy dans le polyépoxyde est de 1,2 à 0,8: 1 et est suffisant pour former un produit durci.

2. Composition telle que revendiquée à la revendication 1, caractérisée en ce que le polyépoxyde (A) est choisi parmi des polyépoxydes contenant une partie oxyde de cyclohexane et des éthers polyglycidyliques de polyols cycloaliphatiques.

3. Composition telle que revendiquée dans la revendication 2, caractérisée en ce que le polyépoxyde (A) contient en outre un polymère acrylique contenant des groupes époxy.

4. Composition telle que revendiquée dans l'une quelconque des revendications 1 à 3, caractérisée en ce que l'agent durcisseur polyacide a un poids équivalent d'acide inférieur à 400.

5. Composition telle que revendiquée dans l'une quelconque des revendications 1 à 4, caractérisée en ce que l'anhydride cyclique (i) est un anhydride cycloaliphatique.

6. Composition telle que revendiquée dans la revendication 5, caractérisée en ce que l'anhydride cycloaliphatique est choisi dans la classe constituée par l'anhydride hexahydrophtalique et un anhydride hexahydrophtalique alkyl-substitué, y compris des mélanges de ceux-ci.

7. Composition telle que revendiquée dans l'une quelconque des revendications 1 à 6, caractérisée en ce que l'ester oligomère a un poids moléculaire moyen inférieur à 750.

8. Composition telle que revendiquée dans l'une quelconque des revendications 1 à 7, caractérisée en ce que l'acide dicarboxylique aliphatique ou son équivalent fonctionnel (a) présente au moins six atomes de carbone.

9. Composition telle que revendiquée dans la revendication 8, caractérisée en ce que l'acide dicarboxylique aliphatique ou son équivalent fonctionnel est choisi dans la classe constituée par l'acide adipique, l'acide succinique et leurs mélanges et les équivalents fonctionnels de tels acides dicarboxyliques.

10. Composition telle que revendiquée dans l'une quelconque des revendications 1 à 9, caractérisée en ce que le polyol organique (b) est un polyol aliphatique contenant de 3 à 12 atomes de carbone.

11. Composition telle que revendiquée dans l'une quelconque des revendications 1 à 10, dans laquelle le rapport molaire du polyol organique (b) aux groupes acide dicarboxylique aliphatique linéaire (a) est d'au moins 1,5 : 1.

12. Composition telle que revendiquée dans l'une quelconque des revendications 1 à 11, caractérisée en ce que le composant polyol (ii) comprend en outre un polyéther polyol.

13. Composition telle que revendiquée dans la revendication 12, caractérisée en ce que le polyéther polyol est un poly (oxytétraméthylène) polyol.

14. Composition telle que revendiquée dans l'une quelconque des revendications 1 à 13, caractérisée en ce que le rapport équivalent des groupes anhydride dans (i) aux groupes hydroxyle dans (ii) est d'au moins 0,8 : 1.

15. Procédé pour appliquer un revêtement composite à un substrat qui comprend l'application au substrat d'une composition filmogène colorée pour former un revêtement primaire et l'application au revêtement primaire d'une composition filmogène limpide ou transparente pour former une couche de finition transparente sur le revêtement primaire, caractérisé en ce que la composition filmogène limpide ou transparente comprend le liant résineux selon l'une quelconque des revendications 1 à 14.